# EUROPEAN PATENT APPLICATION

(11) **EP 0 678 477 A1**
(43) Date of publication of application: **25.10.1995**
(21) Application number: 95302651.5
(22) Date of filing: 20.04.1995
(51) Int. Cl.: C02F 1/28, C02F 1/40

(54) **Method and apparatus for purifying aqueous liquid containing particulate matter and a water-immiscible organic liquid**

(30) Priority: 22.04.1994 US 231707
(71) Applicant: Pall Corporation, East Hills, New York 11548 (US)
(72) Inventor: Weber, Lawrence D., New York 11741 (US); Luis, Margarita, New York 11704 (US); Stevens, Donald B., New York 11050 (US)
(74) Representative: Bibby, William Mark

(57) **Abstract**

A filter element, a system and a method are disclosed for purifying a mixture comprising aqueous liquid, particulate matter and a water-immiscible organic liquid. The filter element (10) comprises at least one sheet of a microporous, non-woven aramid fiber medium having opposing edges secured to each other and defining a cylinder, two endcaps sealed to opposite ends of said cylinder in fluid-tight relationship, at least one of said endcaps having an aperture formed therein, and wherein all of the materials from which said filter element is formed are polymeric materials.

Such an element (10) may be comprised in said system (60) which also comprises a housing (70), at least one fluid inlet (71) in said housing, at least one fluid outlet (77) in said housing, and means (73,74) to backflush liquid through the system.

In use the element or the system is used to treat said mixture, the medium retaining at least the particulate matter.

## Description

### FIELD OF THE INVENTION

The present invention relates to a method and apparatus for purifying aqueous liquid containing particulate matter and a water-immiscible organic liquid and to a filter cartridge and a system for effecting such separation. More particularly, the present invention effects separation of particulate matter and minor amounts of a water-immiscible organic liquid, such as an oil, from an aqueous liquid using a filter element including an aramid material. The invention also relates to a system for processing an aqueous liquid containing both particulate matter and a water-immiscible organic liquid which permits regeneration of the filter element during the process.

### BACKGROUND OF THE INVENTION

Techniques, materials and devices for separating particulate matter from fluids have existed for centuries. Many of the separations involve relatively low-level technology and simple materials. As science and technology have advanced, new materials and techniques have permitted separations to be achieved which the requirements of ever purer materials have demanded. Considering the developments in materials science in recent years, the separation of particulate matter from a fluid might seem to be a simple task. However, many such separations remain unresolved or, more typically, resolved only to the extent that the results obtained fall short of the purification sought. Some of the factors which have frustrated attempts at separation include the large volumes of fluids being processed, the filtration media available for such separation processes, the nature and chemical composition of the particulate matter being removed, the fineness of the particulate matter and the nature of the fluids in which the particulate matter is found.

To illustrate some of the problems which result from such factors, one could consider any large scale industrial process in which large volumes of liquid are employed. The adverse effects of particulate matter present in the liquids being employed will vary from one process to another. Thus, while particulate matter may be tolerated in any amounts in certain processes, others require total elimination of particulate matter. Likewise, the size of the particulate matter may be of little or no significance in some processes but unacceptable in others. Intermediate these extremes, the specifications of some processes permit certain amounts of particulate matter as long as they fall above or below predetermined sizes.

The techniques and filtration materials have ranged at the low technology end of the separation spectrum from simple sieves or beds of readily available materials to the other end of the spectrum where new media have been developed to achieve separations of particulate matter from fluids in which the physical and chemical natures of the fluids, particulate matter and filtration media are all considered. The present invention relates to the latter type of separation.

While the separation of very fine particulate matter from large volumes of aqueous liquids may generally be associated with some problems, the difficulty of such separations increases significantly when a water-immiscible organic liquid (WIOL) such as an oil, is present. By "oil" is meant any water insoluble organic liquid typically described as an oil or fat and typically available from mineral, vegetable or animal sources. The definition also includes inorganic oils, such as silicone oil (organosiloxanes). Most often, the type of oil found mixed with the aqueous liquid and particulate matter is one derived from mineral sources, such as a petroleum-derived liquid, including both lubricating-type oils, paraffin-based oils and petroleum-based fuels. In the presence of oil, separations of particulate matter from aqueous liquids present a variety of problems. In most instances, the problems are not attributable to the particulate matter per se but rather to substances present in the liquid phase.

In many situations, either the oil itself or oil coated solid particles or agglomerates thereof tend to plug the pores of the filtration medium. This results in significant pressure drops across the medium and the concomitant reduction in efficiency. This is the type of problem encountered by nuclear power plants. While such plants typically do not discharge water from the plant, which water is used in many of the processes taking place within the plant for a variety of purposes, significant effort is generally made to remove all sources of contamination in the water which is then recirculated throughout the plant. This includes removal of particulate matter, such as pipe scale, ion exchange materials and dust. In addition, oil, possibly from the machinery employed, finds its way into some of the water employed in the plant. Nuclear power plants typically use three types of separation means, arranged in series. The first separation device is a phase separation tank. This is used to gravity settle or float solid or WIOL phases. After passing through the phase separation tank the water passes through a precoat filter which separates much of the particulate material and oil which may be present. Finally, the water passes through a bed filter which contains an ion exchange bed to remove ionic materials that may be present.

A precoat filter is a type of filter in which a slurry is applied as a cake, called a precoat, to the exterior of a non-pleated porous support called a "septum". After the precoat is applied to the septum, a fluid to be filtered is then directed through the precoat and the septum, the precoat serving to filter and/or chemically treat the fluid. Although pleated filter elements are generally desired in many applications because of their greater efficiency and service life on-stream due to the increased surface area of the filter material which they contain, they generally have not been used in precoat filters as septa. This is because the pleats tend to collapse as the precoat is applied or as the fluid flows through the precoat, or the precoat develops cracks. In addition, precoat filters are initially fairly effective in removing oil from aqueous liquids. However, after continued usage, some oil in high concentrations passes through the filter in "spikes". Any oil which passes through the precoat filter generally reaches the bed filter and adversely affects the ion exchange material contained therein. While precoat filters may be regenerated by removing the precoat material from the septum and applying a new precoat, this operation is time consuming and labor intensive. Precoat filters also have other problems, such as the large volume of waste associated with the precoat. In the case of nuclear power systems, disposal of such waste can cost several hundred thousand dollars per year.

Particulate and oil-containing aqueous liquids are also found at oil and gas exploration and drilling sites. Aqueous liquids are used for a number of purposes in such an environment. Such liquids may be employed to force the petroleum in older wells to the well head, thereby increasing production. Other aqueous liquids are intended to assist in the removal of particulate matter from the well itself, e.g., after operations such as drilling, perforating or cementing operations. Various terms such as "displacement fluids", "production fluids", "completion brines", "completion fluids" and like terms are applied to some of the liquids injected into the well for a variety of purposes. As used herein, the term "injection fluid" is used to describe any aqueous liquid introduced into a well or in the vicinity of the well for whatever purpose, including all of the fluids mentioned above. Injection fluids generally include a variety of chemical additives for different purposes. Typically the aqueous liquids are brines which include sodium and potassium salts, either naturally occurring, such as seawater, or added to form aqueous liquids having higher densities than either pure water or petroleum. Other chemical additives include caustic materials, surfactants, corrosion inhibitors, and polymeric agents. It is desirable for filter elements used to process injection fluids to remove particulate matter which is present. However, any oil contained in the aqueous injection fluid is of little consequence in the filtered product since the processed, purified injection fluid is typically recycled to the well where it is likely to encounter more petroleum. Like the filtration of aqueous liquids in nuclear power plants and other environments in which oil coexists with water, separation of particulate matter is hindered in the presence of oil which fouls the pores of the filtration medium.

Most of the aqueous liquids used in oil and gas exploration and drilling tend to be corrosive in nature. Thus, while metal components of a filter element, such as metal endcaps, cages and cores, are suitable for many purposes, such as in the environment of a nuclear power plant, they are found to have limited service life in the environment of processing injection fluids. In such an application, while the presence of oil can be easily tolerated in the aqueous fluids after removal of particulate matter from the injection fluids, conventional filter elements containing metal components are adversely affected by the corrosive components found in the aqueous phase. In contrast, oil present in aqueous liquids processed in the nuclear power plants adversely affects the ion exchange beds used to remove small amounts of dissolved ionic materials.

Previously filter elements employed for purifying injection fluids were sold as disposable units because of their limited lifetime. Considering both the labor involved in removing and replacing the units, as well as the monetary and environmental costs associated with such replacement, it would be desirable to extend the service life of such filter elements and minimize the labor involved.

### SUMMARY OF THE INVENTION

It is an object of the invention to provide a method and apparatus for purifying aqueous liquid containing particulate matter and a water-immiscible organic liquid, such as oil. It is also an object to separate particulate matter from an injection fluid. A further object is to provide a method and apparatus for separating particulate material from an aqueous liquid employed in a nuclear power plant. In addition, it is an object to provide a process and apparatus for removing not only particulate matter but also oil from an aqueous liquid such as that employed in a nuclear power plant.

It is also an object of the invention to provide a filter element used in separating particulate matter from water-immiscible organic liquids, such as in processing injection fluids. It is also desirable that such filter elements have an extended service life. A further object is to provide a filter element capable of removing both particulate matter and oil present in an aqueous liquid, such as the type found in nuclear power plants.

Another object of the invention is a purification system which is both capable of removing particulate matter from a water-immiscible organic liquid, such as an oil-containing aqueous liquid, and is self-cleaning.

As used herein, terms such as "separation" and "filtration" are used interchangeably to describe media, elements, cartridges, etc. Both terms refer to the physical separation of solid particulate matter and, where appropriate, water-immiscible organic liquids, such as oil, from an aqueous liquid using a porous medium.

Each aspect of the invention includes a filter element employing a particular type of separation medium. This medium preferably includes a microporous, non-woven web of hydrophilic fibers, preferably polyamide fibers, and most particularly, aromatic polyamide fibers. In addition to the term "aromatic polyamide", other terms such as "polyaramid" and "aramid" are used to represent the aromatic polyamides. The term, aramid, is used herein to represent polymers formed from aromatic polyamides.

The absolute pore rating of the preferred microporous, non-woven aramid separation medium is suitably no more than about 15 micrometers, preferably no more than about 10 micrometers and in applications where it is particularly preferred to remove both particulate matter and a water-immiscible organic liquid, is no more than about 2 micrometers.

The hardware of the filter elements, that is, those components of the filter element other than the separation or filtration medium itself, may be of any suitable material capable of withstanding the pressures employed and chemically resistant to the substances which the filter element contacts during processing of fluids. While stainless steel is preferred for applications involving aqueous liquids used in nuclear power plants, non-metallic components, particularly polymeric components are preferred for injection fluids and other fluids of a corrosive nature. Likewise, for separating particulate matter from corrosive aqueous liquids containing a water-immiscible organic liquid, such as oil, the preferred material for the surfaces of all components of the system coming in contact with the fluids being processed are non-metallic materials, such as polymeric materials. The use of such materials for the components of the filter element and at least the surfaces of the other components of the system provides extended service life for the system and the filter element and avoids the necessity of replacing the filter element at frequent intervals. The use of the filter elements of the invention, which include a preferred microporous, non-woven aramid separation medium, in the filtration systems of the invention, which further includes a provision for backflushing of filtration elements, provides a self-cleaning and regeneration aspect to the system which further minimizes the amount of non-operative time of the filtration system and labor required for maintenance of the system.

The method of separating particulate matter from an aqueous liquid further containing a water-immiscible organic liquid, according to the invention, is quite elegant. A microporous, non-woven aramid fiber separation medium is contacted with the contaminated aqueous liquid such that the aqueous liquid passes through the medium. The particulate matter is retained on the upstream surface of or within the separation medium, while the medium resists or even prevents the passage of the water-immiscible organic liquid through the medium. In preferred embodiments, the separation medium is incorporated into a filter element in a cylindrical, preferably a pleated cylindrical, configuration. Such elements may be employed in the separation of both particulate matter and oil from aqueous liquids in the environment of a nuclear power plant without the necessity of using a precoat on the separation medium or septum of the filtration medium.

### BRIEF DESCRIPTION OF THE DRAWINGS

Figure 1 is a cut-away perspective view of a filter element according to the present invention.

Figure 2 is a transverse cross-sectional view of a portion of the filter illustrated in Figure 1.

Figure 3 is an enlarged cross-sectional view of one of the pleats of Figure 2.

Figure 4 is a schematic perspective view of a portion of a filter composite having a cushioning layer.

Figure 5 is a schematic drawing of a filtration system according to the present invention showing a first step in a filtration process according to the present invention.

Figure 6 is a schematic drawing of the separation system of the invention showing the second step in the separation process.

Figure 7 is a schematic drawing of the separation system of the present invention showing the third step of the separation process.

Figure 8 is a schematic drawing illustrating a separation system of the invention showing a back- flush step according to the invention.

### DESCRIPTION OF THE PREFERRED EMBODIMENTS

### Filtration Element:

The separation or filtration elements of the invention include the separation medium and various hardware components used to immobilize the separation medium in a particular configuration and to direct fluid flow to and away from the surfaces of the separation medium.

The preferred separation medium includes a microporous, non-woven web of aromatic polyamide (aramid) fibers. Preferred aramid fibers include fibers of poly(paraphenylene terephthalamide) and related compounds in which the majority of the amide groups are directly attached to aromatic rings. Aramid fibers are commercially available as Kevlar® fibers (Dupont, Wilmington, Delaware), Twaron® fibers (Akzo, Arnhem, Netherlands), Apyeil® fibers (Unipka, Osaka, Japan) and Conex® fibers (Teijin, Osaka, Japan). While any suitable aramid fibers may be used in the present invention, Kevla® 361 and Twaron® 1094 aramid fibers are preferred.

Other media, such as those containing hydrophilic membranes, may be used. Media containing other fibers may also be employed. For example, media containing hydrophilic fibers, such as hydrophilic polyester and polyamide fibers, may be used. However, microporous, non-woven webs of aramid fibers appear to be most effective in the types of separations described herein. This seems to result, at least in part, from the large surface areas of aramid fibers and other physical properties associated with such fibers.

The aramid fibers used in the context of the present invention may be of any suitable length and are typically staple cut fibers of about 0.25 to 0.5 inch in length. Generally, shorter length fibers, such as fibers having lengths of about 0.25 inch or less, are used in connection with the present invention.

The separation media used in the invention include webs of fibers secured to one another with any resin which is chemically resistant to the components of the liquids being processed by the medium.

The media used in the invention have basis weights of about 5 to about 9 gm/ft², preferably about 7 gm/ft². The media have mean pore sizes of about 2 to about 20 micrometers, preferably about 3 to about 12 micrometers, and most preferably about 3 to about 6 micrometers. The filtration rating of the media used in the invention is suitably no more than about 15 micrometers, preferably no more than about 10 micrometers more preferably no more than about 2 micrometers and most preferably about 1.4 micrometers, absolute. Suitable in the present invention are media having first or initial bubble points in alcohol of about 5 to about 50 inches of water, preferably the first bubble point is greater than about 30 inches of water. The open bubble point of separation media suitable for use in the present invention is about 40 to about 100 inches of water, preferably about 50 to about 70 inches of water.

Media suitable for use in the invention are commercially available. A preferred microporous, hydrophilic aramid fiber medium is available from Pall Corporation, Glen Cove, New York.

For many applications, separation elements employing the media of the present invention may be used in the form of planar sheets. However, for most applications, it is preferred to use cylindrical filter elements in which the separation medium is concentrically arranged as a cylinder surrounding the longitudinal axis of the element. Most preferred, however, are cylindrical filter elements having radially extending, longitudinal pleats, since such configurations provide greater surface area to separation media. Most preferred are cylindrical pleated or corrugated filter elements of the type described in Patent Cooperation Treaty patent application serial number PCT/US93/10697, filed November 8, 1993, which is specifically incorporated herein by reference.

The filter medium may include a single layer, or a plurality of layers of the same medium may be arranged in superposed relationship to achieve a desired thickness. The thickness of the separation media may vary with the particular application in which the medium is being used. For the preferred applications in treating water in nuclear power plants or injection fluids, typically the thickness ranges from about 10 to 25 mils, preferably about 15 to about 20 mils. In addition, the filter medium may include two or more layers having differing filtering characteristics, e.g., with one layer acting as a pre-filter for the second layer. In most instances, however, for the types of application described above, a single layer is suitable.

The cylindrical and pleated cylindrical filters of the present invention preferably also include support and drainage media in sheet form, disposed on at least one side, preferably the upstream side, and more preferably on both the upstream and downstream sides of the filter medium. The drainage medium enables fluid to evenly flow to or from substantially all portions of the surface of the filter medium and to prevent opposing surfaces of the filter medium from coming in contact with one another in pleated arrangements. Thus, virtually the entire surface area of the filter medium may be effectively used for filtration.

The upstream and downstream drainage layers may be made of any materials which are chemically resistant or inert to components found in the fluids which are processed by the filter element. In addition, materials used for the drainage layers should have suitable edgewise flow characteristics, i.e., suitably low resistance to fluid flow through the layer in a direction parallel to its surface to provide an even distribution of fluid along the surface of the filter medium. The drainage layers can be in the form of a mesh or screen or a porous woven or non-woven sheet.

Meshes and screens (also called netting) may be formed from various materials and used in various forms. For high temperature applications and where corrosion is not a consideration, a metallic mesh or screen may be employed, while for lower temperature applications and where corrosion is more of a consideration, an appropriate resistant polymeric mesh may be particularly suitable. Materials suitable for polymeric drainage layers include a polyester non-woven fabric sold under the trade designation Reemay 2011, sold by Reemay, Inc. Other suitable materials include polyester and polypropylene polymeric meshes available from Nalle Plastics (Austin, Texas) under the trade names Naltex, Zicot, and Ultraflo.

In the cylindrical and the pleated cylindrical filter elements of the invention, other layers may be included in addition to the filter medium and drainage layers. For example, in order to prevent abrasion of the filter medium due to rubbing contact with the drainage layers when either the medium expands or contracts to contact an outer cage or core member (discussed below), respectively, or when the pleats expand and contract, a cushioning layer can be disposed between the filter medium and one or both of the drainage layers. The cushioning layer is preferably made of a material smoother than the drainage layers and having a higher resistance to abrasion than the filter medium. Generally open-pore material having very low pressure drops (ΔPs) across the material may be employed. Such substrate or cushioning materials may include papers, polyesters (such as Reemay 2250), polyamides and cellulose materials. Cellulose is preferred in the present invention. Typically, these materials are used as thin non-woven webs.

In using cylindrical filter elements, both pleated and unpleated, an outer cage or wrap and a centrally disposed core may be employed in the cylindrical cartridge for greater structural integrity and to reduce stresses placed on the filter medium during normal filtration and backflush operations. Thus, a core supports the inner periphery of the filter medium against forces in the radial direction and also helps to give the element axial strength and rigidity against bending. The core may be of a conventional perforated design and may be made of any material which has sufficient strength and is compatible with the fluid being filtered. As indicated above, a metal, such as stainless steel is suitable for use with fluids being processed in environments such as nuclear power plants; whereas, polymeric materials such as polyolefins, for example polypropylene, and most preferred, glass-filled polypropylene, may be used for processing fluids containing corrosive materials, such as injection fluids.

When the filter element is subjected to outside-to-inside fluid flow, the presence of a core is usually desirable. However, depending upon the forces acting on the filter element during filtration, it may be possible to omit the core. For example, when fluid flow through the filter element is primarily from the inside to the outside thereof, radially inward forces on the filter element may be absent or so low that a core becomes unnecessary, enabling a reduction in the weight of the filter.

In addition to resisting forces in the radial outward direction, an outer perforated cage or a wrap which surrounds the filter medium may be employed for other purposes. For example, the cage protects the filter medium from damage. Further, where the filter medium is arranged with a particular configuration, such as in a laid-over state (which forms a preferred embodiment of the present invention), the outer cage or wrap may serve to retain the pleats in the desired configuration. The same considerations used in selecting the material of the core, and of the endcaps, discussed below, apply to the selection of material used to form the cage.

The wrap can be made of any material which is compatible with the fluid being filtered. The wrap may be formed from a stronger material which resists the relatively larger stresses associated with inside-to-outside flow, e.g., during backflush. If the wrap completely envelopes the outer periphery of the filter element, the wrap is preferably porous. For many applications, a porous, polymeric non-woven material available from Reemay Corporation under the trade designation Reemay is suitable. Laminates of the Reemay material can be also be employed. Examples of other suitable materials are woven wire mesh, woven glass mesh, oil board paper and Mylar film.

Usually, the filters according to the present invention are equipped with endcaps at one or both ends of the filter medium in cylindrically configured filter elements. The endcaps can be either blind or open endcaps, and the material of which they are formed and their shape can be selected in accordance with the filtration conditions and the materials of the members to which the endcaps are to be joined. Generally, the endcaps are formed from the same materials from which the core and/or cage are formed. Preferably, the endcaps are attached to the ends of the cylindrically configured filter medium, but may also be attached to the core and/or the cage. Conventional techniques can be used to attach the endcaps to the filter element, such as by use of an epoxy, by polycapping (as taught, for example, in United States Patent number 4,154,688), or by spinwelding.

The filter element of the present invention can be manufactured by a variety of techniques. In one technique, the filter medium or filter composite is first cut to a suitable length. If a pleated, cylindrical configuration is employed, the filter medium or filter composite is first corrugated to form a corrugated sheet, cut to a suitable length or suitable number of pleats, and then the filter medium is formed into a cylindrical shape. The length-wise edges of the sheet are then sealed to one another by conventional means to form a cylindrical filter element. The cylindrically configured filter medium is then inserted into a cage, if one is used. A core is inserted into the hollow center of the filter element, if used, and then endcaps are attached to the ends of the filter element to form a completed filter.

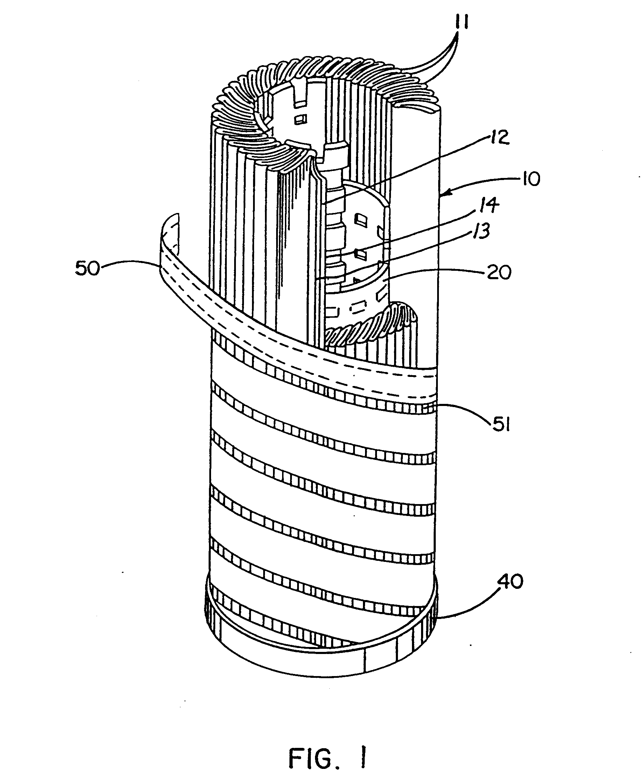

A preferred embodiment of a filter cartridge according to the invention is illustrated in Figures 1 to 4. This embodiment is generally cylindrical in form and includes a pleated filter element 10 having a plurality of longitudinal pleats 11. A cylindrical core 20 is coaxially disposed along the inner periphery of the filter element 10, and a cylindrical wrap 50 is disposed along the outer periphery of the filter element 10.

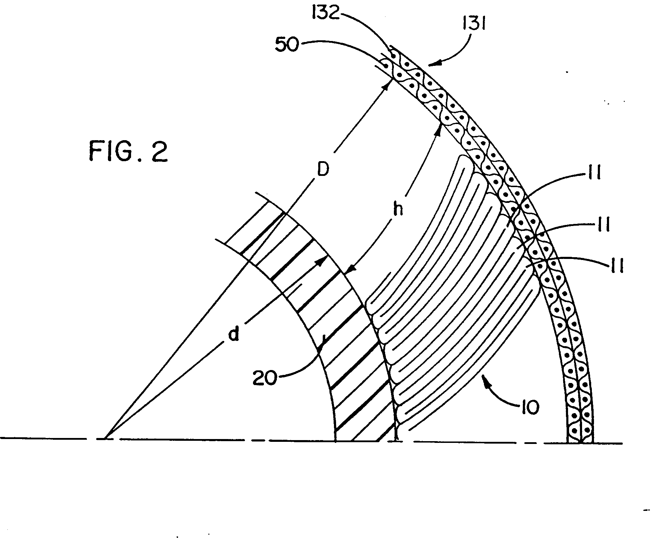

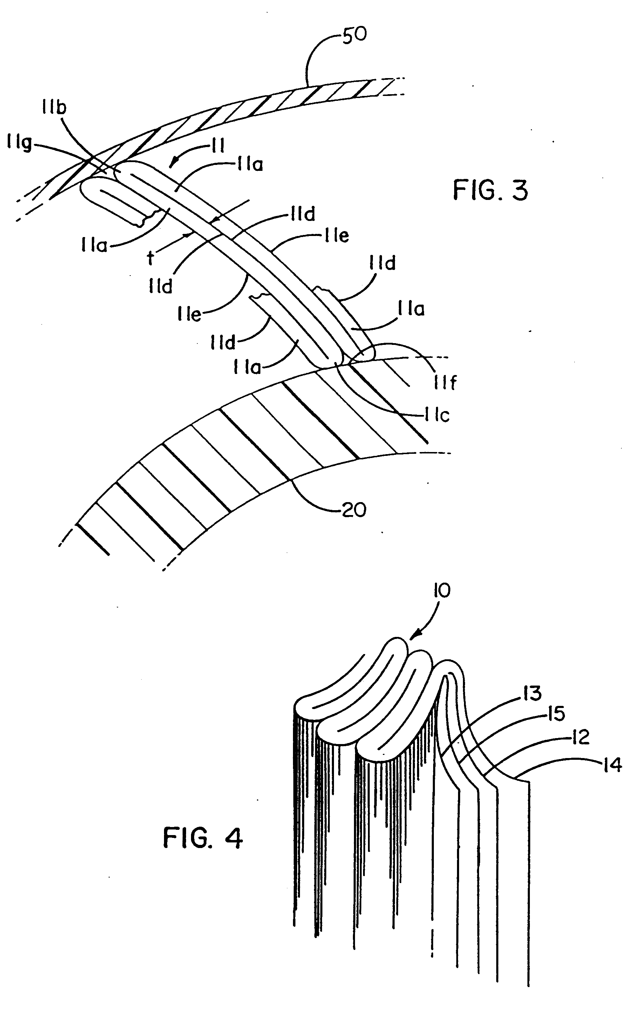

As shown in Figures 2 and 3, each pleat 11 has two legs 11a which are joined to one another at the crown 11b of the outer periphery of the filter element 10 and which are joined to a leg 11a of an adjacent pleat 11 at the root 11c of the inner periphery of the filter element 10. Each leg 11a has an internal surface 11d which opposes the internal surface 11d of the other leg 11a in the same pleat 11, and an external surface 11e which opposes the external surface 11e of a leg 11a of an adjacent pleat 11. When the filter element 10 is used such that the fluid flows radially inwardly through the element, the internal surfaces 11d of the legs 11a form the downstream surface of the filter element 10, while external surfaces 11e form the upstream surface of the filter element 10. Alternatively, when the filter element 10 is being used such that fluid flows radially outwardly through the element, the internal surfaces 11d and the external surfaces 11e, respectively, form the upstream and downstream surfaces of the filter element 10.

In the preferred embodiment illustrated in Figures 1 to 4, the configuration of the pleats is described as a "laid-over" state. Thus, in conventional arrangements the pleats extend radially and the height of a pleat is the radial distance between the inner and outer peripheries of the pleated element. However, in a laid-over state, the pleats extend in an arcuate or angled fashion or in a straight non-radial direction and the height of a pleat is greater than the radial distance between the inner and outer peripheries of the pleated element. In Figures 1 to 4, the pleats preferably are arranged such that the first surface of each leg is in intimate contact with the first surface of an adjoining leg and the second surface of each leg is in intimate contact with the second surface of an adjoining leg over substantially the entire height of each leg and over a continuous region extending for at least approximately 50 percent of the axial length of the filter element, e.g., at least 25% or more. In this state, there may be substantially no empty space between adjacent pleats, and virtually all of the volume between the inner and outer peripheries of the filter element 10 may be occupied by the filter element 10 and can be effectively used for filtration.

Because the pleats are in a laid-over configuration or because the height of each pleat is greater than the difference between the outer and inner radii, the height of the pleats is much larger than that of a conventional filter of the same dimensions. As a result, the surface area of a filter according to the present invention usable for filtration, which is proportional to the pleat height, can be greatly increased, resulting in a longer life span.

In the embodiment of Figure 1, the filter element 10 includes a three-layer composite of a filter medium 12, upstream drainage layer 13 disposed on the upstream surface of the filter medium 12, and downstream drainage layer 14 disposed on the downstream surface of the filter medium 12. Here, upstream and downstream surfaces may refer to the exterior and interior surfaces when the filter is being subjected to radially inward fluid flow or to interior and exterior surfaces, respectively, when the filter is being subjected to radially outward fluid flow.

As indicated above, the filter element 10 may include other layers in addition to the filter medium 12 and the drainage layers 13 and 14. Thus, a cushioning layer 15 can be disposed between the filter medium and one or both of the drainage layers 13 and 14. Figure 4 illustrates an embodiment in which a single cushioning layer 15 is employed between the filter medium 12 and the drainage layer 13. A second cushioning layer could be placed between the filter medium 12 and drainage layer 14. In Figure 1 which employs a helical wrap member 50, a parallel-sided strip of a flexible material which is helically wrapped about the filter element 10 in a plurality of turns.

The wrap member 50 can be wrapped around the filter element 10 with or without overlap between adjacent turns of the wrap member 50. For example, adjacent turns of the wrap member can abut each other with substantially no overlap, or by employing an overlap, it is possible to wrap multiple layers of the wrap member 50 around the filter element 10. However, it has been found that if the wrap member 50 includes unobstructed openings, the dirt capacity of the filter element 10 can be greatly increased compared to that of an unwrapped pleated filter element or compared to a pleated filter element completely enveloped in a wrap member. The openings may be holes formed in the material of the wrap member 50 itself, or they may be gaps left between adjacent turns of the wrap member 50. In the embodiment of Figure 1, the wrap member 50 is wrapped around the filter element 10 so as to leave openings in the form of a helical gap 51 between adjacent turns.

To prevent the wrap member 50 from becoming loaded, the size of the openings of the wrap member 50 should be large enough to allow the passage of virtually all of the particles contained in the fluid being filtered. Furthermore, the total area of the openings is generally less than 50 percent of the total surface area of the cylindrical surface defined by the peaks of the pleats 11 of the filter element 10.

The wrap member 50 is preferably secured in a manner which prevents it from becoming unwound from the filter element 10. One method of securing the wrap member 50 is to attach it to the filter element 10 by a bonding agent, such as a hot melt adhesive, which is applied to the wrap member 50 as it is wound around the filter element 10. The bonding agent can be applied to the wrap member 50 in the form of a continuous or intermittent bead which spirals around the filter element 10 parallel to the edges of the wrap member 50. Alternatively, if the wrap member 50 is made of a polymeric material, which is preferable when the fluid being processed by the filter cartridge is corrosive, it may be fusion bonded to the filter element 10 by a hot wheel which travels down the length of the filter element 10 as the filter element is rotated.

The preferred wrap is a plastic coated glass woven mesh. For most applications, the wrap is preferably a fluropolymer. For applications in which the wrap is fusion or thermally bonded to the filtration medium, the plastic used in the plastic coated glass woven mesh is preferably perfluroalkoxy polymer (PFA), [CF₂-CF₂- (0 (CF₂) CF₃) -CF₂-CF₂), or fluorinated ethylene propylene (FEP). When a hot melt adhesive is employed, the plastic of the wrap is preferably polytetrafluoroethylene (PTFE).

The wrap member 50 can be attached directly to the filter element 10 or if there is overlap between adjacent turns of the wrap member 50, the adjacent turns can be attached directly to one another. It is also possible to wrap the wrap member 50 around the filter element without directly attaching the two together, and to secure only the portions of the wrap member 50 adjoining the endcaps 40 by means of the endcaps 40 or by other mechanical means such as crimping.

Although a precoat is generally unnecessary with the present invention even when used in purifying liquids from a nuclear power plant, a precoat filter may be used in conjunction with the outer cage. In particular, as illustrated in Figure 2, a precoat filter 131 may include a wrap 50 which serves as a septum for holding a precoat layer and a protection member 132 for protecting the precoat layer 130 from erosion.

Usually, a filter according to the present invention will be equipped with endcaps 40 (only one of which is shown in Figure 1) at one or both ends of the filter element 10. The endcaps 40 can be either blind or open endcaps, and individual filter cartridges typically include one blind endcap and one open endcap. The open endcap serves either as a fluid inlet or a fluid outlet, depending upon the direction of fluid flow. In some instances, it may be preferable to form a series arrangement in which several filter cartridges are joined to one another to form a larger, elongated multiple unit filter. In such instances, either the most downstream cartridge or the most upstream cartridge, depending upon the direction of fluid flow, will have both a blind endcap and an open endcap and the remaining cartridges will each have only open endcaps. Suitable engaging means, such as threading or bayonet-type engaging portions may be provided on each of the open endcaps to arrange and secure the filter cartridges to one another in series in head-to-tail arrangement. Alternatively, rather than using such engaging means, the cartridges may be permanently joined to one another using adhesive, welding or the like.

Another aspect of the invention relates to a regenerable, self-cleaning separation system to separate particulate matter from aqueous liquids containing water-immiscible organic liquids, such as oil.

When employing the filter cartridges described above, in addition to being able to remove particulate matter from oil-containing aqueous fluids and improving the separation of oil from aqueous liquids (a previously difficult separation by conventional means), removing finer particulate matter at lower cost, and providing longer terms of service (in some instances for periods in excess of three years), the purification system of the invention allows self-cleaning of the filters employed and removal of contaminants from the system. This is achieved through a backflush or backwash technique which may be operated manually or automatically. While not wishing to be held to a particular theory, the improved separation of water-immiscible organic liquids, such as oil and of oil bearing particulate matter and the facile cleaning of such media-containing filter cartridges is believed to be attributable to the same phenomenon. The hydrophilic nature of the media of the present invention inhibits the passage of hydrophobic substances through the pores of the media. The term "hydrophobic substances" would characterize most water-immiscible organic liquids. Likewise, such substances would not easily adhere to the surfaces of hydrophilic media, allowing them to be easily removed by a cleaning method such as backflushing. This desirable behavior is particularly characteristic of the preferred microporous, aramid fiber media and separation cartridges containing such media.

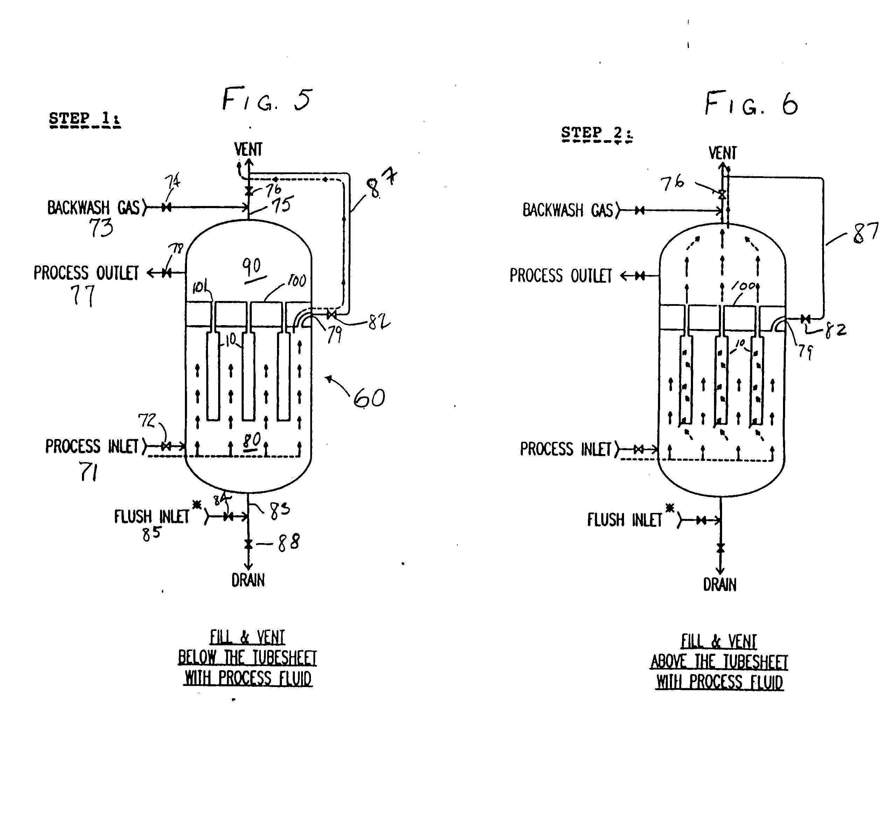

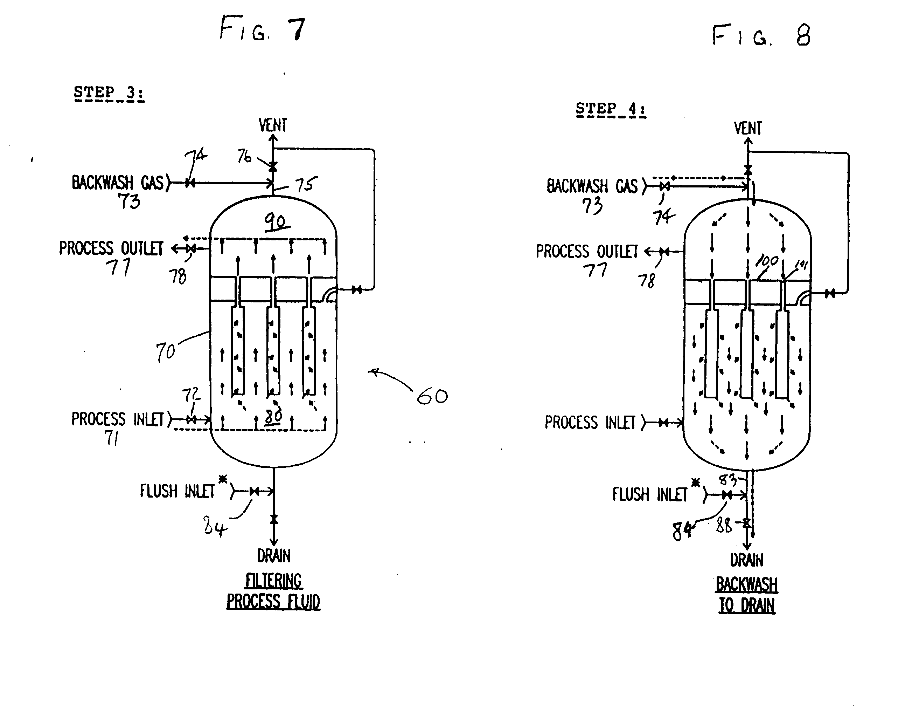

A typical system according to the invention is illustrated schematically in Figures 5 to 8. The system, indicated generally by reference numeral 60, includes a housing 70 having at least one fluid inlet and at least one fluid outlet. Preferably, the housing includes a process liquid inlet 71 to introduce fluids being processed to the separation system. Preferably the process inlet 71 is located toward the bottom of the housing 70 and is associated with a flow control valve 72. A backwash inlet 73 and associated valve 74 are provided either directly in the housing in a location remote from the process inlet 71 or is combined with a conduit 75, also located remote from the process liquid inlet 71, which serves as a common conduit and both a fluid inlet and outlet to the housing.

In the preferred embodiment illustrated in Figures 5 to 8, a tube sheet 100 serves as a support for the filter elements 10 and as a fluid barrier to separate a first chamber 80, within the housing 60, from a second chamber 90, also located within the housing 60. The contaminated aqueous process liquid containing particulate matter and water-immiscible organic liquid is introduced to the first chamber or contaminated liquid chamber 80 through the process inlet 71 and valve 72. After passing through the filtration medium 12 of a filter element 10 (in an outside-to-inside flow direction in the embodiments shown in Figures 5 to 8), the solid, and in many instances water-immiscible organic liquid-contaminants, are removed and the purified liquid passes from the interior of the filter elements 10 through openings 101 in the tube sheet 100 which are in fluid communication with the interiors of the filter elements 10. The liquid passes along the interiors of the filter elements, through openings in the tube sheet, and then enters the second chamber or purified liquid chamber 90.

The purified liquid chamber 90 of the housing 60 further includes a process outlet or purified liquid outlet 77 and an associated valve 78 for removal of purified liquid from the housing 60. A vent 79 and an associated valve 82 are provided in the wall of the housing 60 which forms the chamber 80 for removal of air and other gases from the contaminated liquid chamber 80. Similarly, a vent 75 and an associated valve 76 are provided in the purified liquid chamber 90 for removal of air and other gases from the purified liquid chamber 90. A drain outlet 83 and associated valve 88 are provided in the bottom of the housing in the contaminated liquid chamber 80. A flush inlet 85 and an associated valve 84 may be separately formed in a wall portion of the bottom of the contaminated liquid chamber 80, in the housing 60 or placed in fluid communication with the conduit from the drain 83, as illustrated in Figures 5 to 8.

The filter elements, filter cartridges and filter media used in the invention have been discussed above. In the regenerable, self-cleaning filtration systems of the present invention, cylindrical, pleated filter cartridges are preferred. Pleating allows the use of smaller cartridges as well as smaller housings, containing fewer cartridges. Use of non-pleated cylindrically configured filter media or the use of depth filters increases the volume of the housing on the order of three times or more. The embodiment illustrated in Figures 5 to 8 includes a plurality of filter cartridges arranged in parallel and secured downwardly depending from the tube sheet 100. Where large volumes of liquid are being processed, depending upon the flow rate and amount and type of contamination, each of the individual filter elements 10 may be substituted with a filter assembly containing several filter elements welded together in a series arrangement.

When used to process corrosive liquids, such as injection fluids, not only are all components of the filter cartridges 10 formed preferably from a polymeric material to resist the corrosive effects of such liquids, but each of the component parts of the system or the fluid contacting surfaces of each of the component parts of the system, including tube sheets, outlets, valves, conduits, etc. are also preferably formed from a non-metallic material, such as a polymeric material capable of resisting the corrosive effects of the fluids being processed. Corrosion-resistant materials employed should resist corrosion not only at ambient temperatures but also should be able to withstand corrosion at elevated temperatures, such as about 200° F, encountered for many processing fluids. Either the individual components may be formed from such polymeric materials or are coated with such materials. For example, considering manufacturing technology and costs, a metal housing is preferred. However, all of the liquid-contacting surfaces are preferably coated with a corrosion-resistant material such as a glass flake-containing vinyl ester resin. The tube sheet is preferably formed from a fluoropolymer, such as polyvinylidene fluoride. Other hardware may be formed from or coated with similar materials. Polytetrafluoroethylene may be used in some instances as a coating or liner for components such as valves. The regenerable, self-cleaning system may also include additional valves, gauges, actuating mechanisms and control devices to effectively form the backflushing operation described below.

### Purification and Regeneration Procedures:

In its simplest form, the method of separating particulate matter from aqueous mixtures containing a water-immiscible organic liquid using the separation elements of the invention simply involves contacting the liquid mixture with the separation medium of the present invention to allow the aqueous phase to pass through the medium, the particulate matter, and preferably the water-immiscible organic liquid being retained either on the upstream surface of the medium or within the pores of the medium. Thus, experiments were preformed using filter cartridges according to the present invention containing a filter medium formed from Kevlar® fibers and having an absolute pore rating of 1.4 micrometers absolute (and a nominal removal rating of 0.5 micrometers). An aqueous liquid simulating that which might be found in the environment of a nuclear plant, containing both particulate matter contaminant and an oil contaminant was passed through the filter element. Turbidity studies of the effluent were conducted which showed that not only was the particulate matter retained by the filter medium, but also the oil component was retained by the medium. While media prepared with conventional materials, such as polypropylene fibers, had previously shown retention of oil for an initial period of time, but failed to retain the oil after continued usage, the experiments with the medium and filter cartridge of the invention were continued for an extended period of time, significantly longer than with other cartridges containing conventional media. The turbidity studies revealed that in every instance the filter cartridges of the invention reduced oil contamination in the effluent to less than 10 ppm with no indication of extrusion of oil through the medium such as was observed with conventional types of media.

Filter cartridges were prepared according to the invention with polymeric materials exclusively. After passage of a brine such as that used in injection fluids was passed through the cartridge for an extended period of time, examination indicated no apparent deterioration of the components.

The filter element containing the separation medium may simply be placed in the process stream in order to effect at least partial separation. More effective separation requires all of the process fluid to be treated with and to pass through a cartridge. This is most easily achieved in a confined area, such as a housing, and with a barrier within the housing, such as a tube sheet, which forces all of the liquid to pass through a filter.

The amounts of particulate matter which can be separated is determined by numerous factors. These include, but are not limited to, particle sizes of contaminants in the influent aqueous liquid challenging the separation medium, the total surface area of the separation medium, the pore characteristics of the separation medium, etc. Thus, wide variations may exist. For aqueous liquids such as those encountered in nuclear power plants which have been pretreated by gravity settling in a phase separation tank, removal of particulate matter in the range of about 1 to about 100 ppm would not be atypical.

The regenerable, self-cleaning purification system of the present invention, a preferred embodiment of which is illustrated in Figures 5 to 8, is operated as follows. In a first step, illustrated in Figure 5, air and other gases are displaced from the contaminated liquid chamber 80. The vent cycles are required to remove any gas from the housing in order to preclude gas from being entrained in the purified liquid effluent. The first step is performed by opening valve 72 to introduce contaminated liquid through the process inlet 71 to the contaminated liquid chamber 80 of the housing 60. At about the time valve 72 is opened, valve 82 is opened to allow air and other gases or vapors contained in chamber 80 to be displaced therefrom through gas outlet 79, valve 82 and vent conduit 87. Since valve 76 in the common conduit 75 is closed, as are valves 78 and 74 (controlling flow from the purified liquid chamber 90 to the process outlet 77 and backwash gas chamber, respectively), there is little tendency of the entering contaminated liquid to pass through the filtration medium 12 of the filter elements 10 and into the purified liquid chamber 90. As the contaminated liquid fills the contaminated liquid chamber 80 and approaches the tube sheet 100, most of the air contained in the contaminated liquid chamber 80 is discharged therefrom through gas outlet 79, valve 82 and vent tube 87.

Once the contaminated liquid chamber 80 is filled with liquid and most of the air is displaced therefrom, the second step is initiated in which liquid passes into the filter elements 10 through the filter medium 12 and purified liquid emerges from the elements through the openings 101 of tube sheet 100 and passes into the purified liquid chamber 90. At the completion of the first step, illustrated in Figure 5, the second step, illustrated in Figure 6, begins by closing valve 82, located intermediate the gas outlet 79 and the vent tube 87, and opening valve 76. This eliminates any opportunity for liquid to flow out of the gas outlet 79 and provides the only outlets from the contaminated liquid chamber 80, through the filter elements 10 and openings 101 in the tube sheet 100. As liquid enters the purified liquid chamber 90, it displaces air and any other gases or vapors present in the purified chamber 90 through the tube 75 and valve 76. The vent cycles are normally terminated by a liquid level switch (such as one of the capitance type) which senses the influent effluent at the proper level in the housing or related piping. When substantially all of the air is displaced from the purified liquid chamber 90, the second step is completed and the third step, the main purpose of the invention, filtering substantial volumes of process fluid, begins.

At this point, valve 76 is closed and valve 78 is opened, permitting purified liquid to flow from the chamber 90 through the process outlet 77. This continues for an extended period of time until filtration efficiency declines because of the separation medium becoming clogged with particulate matter and oil. This can be determined or sensed with pressure gauges or pressure sensors located in the system. Thus, when the filtering step in which process fluid is purified begins, the pressure across the medium of the filtration cartridges or across the tube sheet is relatively low, typically below about 5 psid and often below about 2 psid. After filtration continues for some time, and the separation medium 12 of the filter cartridges 10 become clogged, the ΔP increases. When the ΔP values rise substantially, efficiency declines significantly and there may be the potential for damage to components in the system. At such time, the backflush step 4, illustrated in Figure 8 is initiated. The particular ΔP at which this occurs varies from system to system and varies with such factors as the size of the system, the materials from which the components are formed, pore characteristics of the media, etc. Generally the ΔP at which this occurs is below about 40 psid and more typically is no more than about 25 psid.

At this time, valve 74 is opened allowing backwash or backflush fluid to enter the purified liquid chamber 90 through the conduit 73 and common conduit 75. At substantially the same time, valve 88 is opened, allowing contaminated liquid to be discharged rapidly through the drain 83 and causing a sudden change in pressure in the system. At substantially the same time, valve 78 is closed, thereby preventing purified liquid from passing from purified liquid chamber 90 to the process outlet 77. The backflush fluid causes fluid flow in the system to be in the reverse direction of that in steps 2 and 3. Thus, the liquid in the purified liquid chamber 90, passes through the tube sheet 100 and openings 101 and into the separation elements 10. This causes the purified liquid to pass through the pores of the separation medium 12, thereby dislodging particulate matter and oil trapped on the exterior surfaces and pores of the separation medium 12. The contamination which is dislodged from the filter cartridges 10 flows out through the drain conduit 83 and valve 88 to the drain. While the operation of the backflush cycle may be initiated manually, for example, by depressing a push button on an electrical control enclosure, it is much preferred to use an automated system in which the backwash cycle is initiated by a differential pressure instrument or switch and/or a timer to provide a timed cycle.

The backflush is accomplished by a reverse flow of the effluent, propelled by the backwash fluid. Preferably the backwash fluid is a gas such as nitrogen, natural gas or air. Preferably the gas used as the backwash fluid is air; however, other gases are used when air is not compatible with the process fluid. The gas assist is generally more effective than using a liquid assist. The backwash gas is usually supplied from a receiver in close proximity to the filtration housing(s). The volume of the receiver is determined by the volume of the filter housing, the diameters of both the gas supply piping and the drain piping, the head difference between the housing and the end of the drain pipe, the length of the pipe involved and whether or not the drain empties to the atmosphere or to another vessel which may or may not be pressurized. The reverse flow is started by the drain valve being opened in less than one second which creates a hydraulic shock to the interior of the filter element, thus causing the particulate cake to be dislodged and removed from the outer surface of the filter elements and carried to the drain in the liquid stream. This valve operation is preferably triggered by a pressure switch sensing the proper backwash gas pressure in the receiver.

The pressure of the backflush gas is usually in the range of 60 to 90 psig. The supply gas line is generally isolated during the backflush cycle in order to minimize the volume used. This line is opened during the filter cycle to keep the gas demand at a minimum.

As shown in Figures 5 to 8, either the housing itself or the drain conduit 83 may be provided with a flush inlet. This is optionally provided in order that after a standard effluent backflush cycle, the contaminated liquid chamber 80 may be filled with another cleaning or flushing liquid and again using a gas assist, the contaminated liquid chamber is backflushed to drain.

Figures 5 to 8 illustrate a single regenerable, self-cleaning separation housing and system. Although the single unit is highly efficient, purification of process liquid is intermittently halted during the backflush operation. To avoid such interruptions, two or more regenerable, self-cleaning purification system units may be so arranged in parallel that when one unit stops the purification procedure in order to backflush the filter elements, the other unit(s) is actuated and begins purifying contaminated liquids. Use of such "duplex" systems employing two or more units permits continuous purification of liquid streams.

## Claims

1. A method of purifying an aqueous liquid containing particulate matter and a water-immiscible organic liquid comprising passing a mixture containing an aqueous liquid, particulate matter and an immiscible organic liquid through a microporous, hydrophilic medium, whereby at least the particulate matter is retained by the microporous, hydrophilic medium.

2. A method according to claim 1 wherein said microporous hydrophilic medium includes polyamide fibers.

3. A method according to claim 1 wherein said microporous, hydrophilic medium comprises a non-woven aramid fiber medium.

4. A method according to claim 1 wherein said water-immiscible organic liquid is retained by said medium.

5. A method according to claim 3 wherein said microporous, non-woven aramid fiber medium and an absolute pore rating of not more that about 15 micrometers.

6. A method according to claim 3 wherein said microporous, non-woven aramid fiber medium has an absolute pore rating of not more than about 2 micrometers.

7. A method according to claim 1 wherein said aqueous liquid is a corrosive aqueous liquid.

8. A method according to claim 1 wherein said water-immiscible organic liquid is oil.

9. A filter element comprising:
at least one sheet of a microporous, non-woven aramid fiber medium having opposing edges secured to each other and defining a cylinder;
two endcaps sealed to opposite ends of said cylinder in fluid-tight relationship, at least one of said endcaps having an aperture formed therein,
wherein all of the materials from which said filter element is formed are polymeric materials.

10. A filter element according to claim 9 wherein said microporous, non-woven aramid fiber medium has an absolute pore rating of no more than about 15 micrometers.

11. A filter element according to claim 9 wherein said microporous, non-woven aramid fiber medium has an absolute pore rating of no more than about 2 micrometers.

12. A filter element according to claim 9 wherein said microporous, non-woven aramid fiber medium is corrugated.

13. A filter element according to claim 9 wherein at least one of the sides of said at least one sheet of microporous, non-woven aramid fiber medium contacts a porous support layer.

14. A filter element according to claim 13 wherein said at least one sheet of microporous, non-woven aramid fiber medium and said porous support layer are corrugated.

15. The filter element of claim 15 wherein said filter element includes multiple sheets of microporous, non-woven aramid fiber medium arranged in superposed relationship.

16. A system for purifying an aqueous liquid containing particulate matter and a water-immiscible organic liquid comprising:
a housing;
at least one fluid inlet in said housing;
at least one fluid outlet in said housing;
at least one filter element including a microporous, non-woven aramid fiber medium; and
means to backflush fluid through the system.

17. A system according to claim 16 wherein said system includes a device to actuate backflushing of the system when a pressure differential across said medium exceeds a predetermined value.

18. A system according to claim 16 wherein said system includes a device to actuate backflushing of the system at timed intervals.

19. A system according to claim 16 wherein said system includes a device to actuate backflushing of the system when a pressure differential across said medium exceeds a predetermined value and at timed intervals.
